(19) Europäisches Patentamt / European Patent Office / Office européen des brevets

(11) EP 3 326 470 B1

(12) # EUROPEAN PATENT SPECIFICATION

(45) Date of publication and mention of the grant of the patent:
**18.09.2024 Bulletin 2024/38**

(21) Application number: **17204137.8**

(22) Date of filing: **28.11.2017**

(51) International Patent Classification (IPC):
***A23K 10/30*** *(2016.01)* ***A23K 50/00*** *(2016.01)*
***A23K 50/10*** *(2016.01)* ***A23L 5/30*** *(2016.01)*

(52) Cooperative Patent Classification (CPC):
**A23L 5/36; A23K 10/30; A23K 40/00; A23K 50/10**

(54) **A METHOD FOR INCREASING THE NUTRITIONAL VALUE OF VEGETABLE MATERIALS AND A VEGETABLE MATERIAL OBTAINED THEREWITH**

VERFAHREN ZUR ERHÖHUNG DES NÄHRWERTES VON PFLANZLICHEN MATERIALEN UND EIN DAMIT HERGESTELLTES PFLANZLICHES MATERIAL

PROCÉDÉ PERMETTANT D’AUGMENTER LA VALEUR NUTRITIONNELLE DE MATIÈRES VÉGÉTALES ET MATÉRIAU VÉGÉTAL OBTENU AVEC CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2016 NL 2017888**

(43) Date of publication of application:
**30.05.2018 Bulletin 2018/22**

(73) Proprietor: **Agrifirm North West Europe Holding B.V.**
**7325 AW Apeldoorn (NL)**

(72) Inventors:
- **WEURDING, Roelof Eduard**
  **7325 AW APELDOORN (NL)**
- **VAN HEES, Josephus Johannes Antonius**
  **7325 AW APELDOORN (NL)**

(74) Representative: **Algemeen Octrooi- en Merkenbureau B.V.**
**P.O. Box 645**
**5600 AP Eindhoven (NL)**

(56) References cited:
**WO-A1-2016/195487 WO-A2-2011/023168**

- **DATABASE COMPENDEX [online] ENGINEERING INFORMATION, INC., NEW YORK, NY, US; October 2008 (2008-10-01), RAMASWAMY H ET AL: "Microwave and radio frequency heating", XP002777650, Database accession no. E20090611893641**
- **RAMASWAMY H ET AL: "Microwave and radio frequency heating", FOOD SCIENCE AND TECHNOLOGY INTERNATIONAL OCTOBER 2008 SAGE PUBLICATIONS INC. US, vol. 14, no. 5, October 2008 (2008-10-01), pages 423 - 427, XP055611875, DOI: 10.1177/1082013208100534**
- **DATABASE FSTA [online] INTERNATIONAL FOOD INFORMATION SERVICE (IFIS), FRANkFURT-MAIN, DE; BORCHERS R ET AL: "Rapid improvement in nutritional quality of soybeans by dielectric heating.", Database accession no. FS-1972-07-J-1237**
- **vol. 37, no. 2, JOURNAL OF FOOD SCIENCE 1972 DEPT. OF BIOCHEM. & NUTR., UNIV. OF NEBRASKA, LINCOLN, 68503, USA, pages 333**
- **ILDIKO S G ET AL: "The effect of radio frequency heat treatment on nutritional and colloid-chemical properties of different white mustard (Sinapis alba L.) varieties", INNOVATIVE FOOD SCIENCE AND EMERGING TECHNOLOGIES, vol. 7, no. 1-2, 1 June 2006 (2006-06-01), , ELSEVIER, AMSTERDAM, NL, pages 74 - 79, XP028057068, ISSN: 1466-8564, [retrieved on 20060601], DOI: 10.1016/J.IFSET.2005.06.001**
- **NADIA C. LARA ET AL: "Water-structuring molecules and nanomaterials enhance radiofrequency heating in biologically relevant solutions", CHEMICAL COMMUNICATIONS, vol. 52, no. 85, 1 January 2016 (2016-01-01), pages 12630 - 12633, XP055444607, ISSN: 1359-7345, DOI: 10.1039/C6CC06573B**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



**(Cont. next page)**

- BORCHERS R ET AL: "Rapid improvement in nutritional quality of soybeans by dielectric heating.", JOURNAL OF FOOD SCIENCE, vol. 37, no. 2, 1972, pages 333 - 334, XP002777649
- PUNIDADAS PIYASENA ET AL: "Radio Frequency Heating of Foods: Principles, Applications and Related Properties-A Review", CRITICAL REVIEWS IN FOOD SCIENCE AND NUTRITION, vol. 43, no. 6, 1 October 2003 (2003-10-01), USA, pages 587 - 606, XP055359772, ISSN: 1040-8398, DOI: 10.1080/10408690390251129

## Description

The present invention relates to a method for increasing the nutritional value of a vegetable material. In other words, the present invention relates to a method of treating a vegetable material to obtain a vegetable material having an increased nutritional value for ruminants. The method according to the present invention is mainly related to increasing the protein, starch and/or fat utilization of the material by ruminants.

Methods for increasing the utilization of proteins in proteinaceous animal feed by ruminants are disclosed by prior art documents. These methods include: (a) chemical treatment with tannin, as disclosed in US patent No. 3,507,662, (b) chemical treatment with formaldehyde, as disclosed in US patent No. 3,619,200, (c) adding sugars to the proteinaceous animal feed and heating the mixture at a determined temperature and pH conditions, as disclosed in US patent No. 5,023,091, (d) mixing the proteinaceous animal feed with a carbohydrase enzyme, followed by heating of the mixture at a determined temperature, pH and percentage moisture; (e) heating the proteinaceous animal feed using compressive pressures, i.e. heating the product by frictional heat, for increasing the utilization of proteins by reducing the degradability of said materials as disclosed in US patent no. 3,695,891; (f) microwave radiation as discussed in Dong. S. et al, Asian Australas. J. Anim. Sci. 18, 2005, 27-31; Sadeghi A. et al, Anim. Sci. 80, 2005, 369-375; Brodie G. et.al, J. Microwave Power E. E. 46, 2012, 57-67.

The methods (a)-(d) all involve the reaction of the proteinaceous animal feed with an added reagent. Method (e) has the disadvantage that there is a risk of excessive heating leading to protein in the feed that is indigestible in the post-rumen tract. Method (f) has the disadvantage that the heating is not homogeneous and only the outer layer of the treatment material is sufficiently heated, generating large inhomogeneous products, and leads to a drawback that this method is not applicable on large scale since the heat has to penetrate the remainder of the product by means of convection and/or conduction.

Methods for increasing the utilization of starch in starch-containing animal feed by ruminants are disclosed by prior art documents: Dong. S. et al, Asian Australas. J. Anim. Sci. 18, 2005, 27-31; Sadeghi A. et al, Anim. Sci. 80, 2005, 369-375 and Brodie G. et.al, J. Microwave Power E. E. 46, 2012, 57-67, for example, showed that starch and protein digestibility is increased by heating animal fodder by means of microwaves, at a frequency of 2.45 GHz and a power ranging between 750 W and 6 kW.

Ildiko et al. Innovative Food Science and Emerging Technologies, June 2006, volume 7, nor. 1-2 pages 74-79 disclose RF heating of mustard seed leading to enzyme inactivation.

There is a need in the field of feed preparation for an efficient, safe and reliable method for treating a vegetable material in order to increase the nutritional value and to increase the value of said material in feed manufacture.

It is an object of the present invention to provide a method for increasing the nutritional value for ruminants of vegetable material which is suitable for use as or for being processed into ruminant feed.

It is an object of the present invention to provide a method for increasing the nutritional value of vegetable material with a power consumption that is as low as possible.

A further object of the present invention is to provide a method for increasing the nutritional value of a vegetable material which is suitable for use as or for being processed into feed for ruminants.

One or more of the above cited objects are achieved by the several aspects and embodiments of the present invention as discussed below.

## Summary of the invention

In a first aspect, the present invention relates to a method for increasing the nutritional value of a vegetable material according to claim 1. In other words, the present invention relates to a method of treating a vegetable material to obtain a vegetable material having an increased nutritional value for ruminants.

The present invention aims to increase the nutritional value of a vegetable material by using heating by means of radiation in the radio frequency range (also called RF heating in the present invention), specifically in the radio frequency range of between 10MHz and 50MHz.

In an embodiment, the additive has a dielectric constant above 5, preferably above 10, more preferably above 20, even more preferably above 30.

In an embodiment, the additive has a melting point below 100°C, preferably below 95 °C, more preferably below 50°C, even more preferably below 25°C.This facilitates the addition and mixing of the additive with the vegetable material.

In an embodiment, the additive has a boiling point above 90 °C, preferably above 100 °C, more preferably above 110°C, more preferably above 130°C, such as above 150°C, even more preferably above 180 °C, such as above 200°C, most preferably above 230°C, such as above 250°C.

In an embodiment, the alkane polyol has a carbon chain of between C3 to C6, more preferably having the molecular formulae $C_xH(_{2x+2})O_x$. In an embodiment, the alcohol has a carbon chain of between C3 to C6, more preferably having the molecular formulae $C_xH(_{2x+2})O$.

In an embodiment, the alkane polyol, additive is chosen from the group consisting of: glycerol, sorbitol, xylitol, and combinations thereof.

In an embodiment, the additive is added prior to and/or during subjecting the vegetable material to heating at a temperature of at most 95°C, such as at most 90°C, more preferably at most 80°C, such as at most 70°C, even more preferably at most 60°C, such as at most 50°C, most preferably at most 40°C, such as at most 30°C or at most ambient temperature (25 °C).

In an embodiment, the combination of additive and vegetable material comprises between 0.1 and 20 wt.% of said additive, preferably between 0.5 and 20 wt.% of said additive, more preferably between 1 and 15 wt.% of said additive, even more preferably between 1.5 and 15 wt.% of said additive, most preferably between 2 and 10 wt.% of said additive.

In an embodiment, the processing time of the vegetable material subjected to heating by means of radiation in the radio frequency range is between 5 minutes and 90 minutes (1.5 hours), preferably between 5 minutes and 60 minutes (1 hour), such as between 10 minutes and 50 minutes, more preferably between 10 minutes and 40 minutes, such as between 10 minutes and 35 minutes or between 15 minutes and 30 minutes.

In an embodiment, the range of radio frequency radiation is 27.12 MHz ±0.6 %.

In an embodiment, the vegetable material is selected from grains, tubers and residual vegetable materials and one or more combinations thereof.

In an embodiment, the residual vegetable material is a residue of grain or tuber processing. In an embodiment, the residual vegetable material is a residue of processing of rapeseed, soybean, wheat, barley or corn and one or more combinations thereof. In an embodiment, the residual vegetable material is selected from the group consisting of rapeseed meal, soybean meal, sunflower seed meal, dehydrated Alfalfa meal, dehydrated grass meal, DDGS corn and one or more combinations thereof.

In an embodiment, the grains are selected from the group consisting of cereal grains, legumes and oilseeds, more preferably corn, peas, sweet lupines, soybeans, rapeseed, wheat, barley and one or more combinations thereof.

In an embodiment, the tubers are selected from the group consisting of potato, such as the by product potato protein, yam, sweet potato, cassava and one or more combinations thereof.

In an embodiment, the material is subjected to RF radiation to achieve a temperature of between 110°C and 170°C, more preferably between 110°C and 165°C, such as between 120 °C and 165 °C, even more preferably between 130°C and 165°C, most preferably between 130 and 150 °C .

In an embodiment, the vitro ileal protein digestibility (VIPD) has decreased with no more than 30 percentage units. In an embodiment, the in situ intestinal digestibility measurement (dRUP) either has increased by 0 to 3 percentage units or has decreased by no more than 10 percentage units. In an embodiment, wherein the rumen undegradable starch (RUS) value increases by between 10 and 30 percentage units. In an embodiment, the rumen undegradable fat RUF value increases by between 10 and 30 percentage units.

In an embodiment, soybean meal extracted is used as vegetable material and wherein the Aufrère value has increased with 10 to 45 percentage units and/or the vitro ileal protein digestibility (VIPD) has decreased with no more than 30 percentage units. In an embodiment, rapeseed meal. extracted is used as vegetable material and wherein the Aufrère value has increased with 5 to 20 percentage units and/or the vitro ileal protein digestibility (VIPD) has decreased with no more than 30 percentage units. In an embodiment, rapeseed meal. expeller is used as vegetable material and wherein the Aufrère value has increased with 10 to 60 percentage units and/or the vitro ileal protein digestibility (VIPD) has decreased with no more than 30 percentage units. In an embodiment, soybeans are used as vegetable material and wherein the Aufrère value has increased with 30 to 60 percentage units and/or the vitro ileal protein digestibility (VIPD) has decreased with no more than 30 percentage units and/or an increase in the rumen undegradable fat (RUF) value of between 10 to 60 percentage units. In an embodiment, corn is used as vegetable material and wherein the Aufrère value has increased with 10 to 35 percentage units and/or the vitro ileal protein digestibility (VIPD) has decreased with no more than 30 percentage units and/or an increase in the RUS value of between 5 and 40 percentage units. In an embodiment, wheat is used as vegetable material and wherein the Aufrère value has increased with 5 to 25 percentage units and/or the vitro ileal protein digestibility (VIPD) has decreased with no more than 30 percentage units and/or an increase in the RUS value of between 10 to 50 percentage units. In an embodiment, barley is used as vegetable material and wherein the Aufrère value has increased with 5 to 25 percentage units and/or the vitro ileal protein digestibility (VIPD) has decreased with no more than 30 percentage units and/or an increase in the RUS value of between 5 and 30 percentage units.

The present specification also discloses a vegetable material having an improved nutritional value that is directly obtained by a method according to the present invention. In addition, the present specification also discloses a vegetable material having an improved nutritional value obtainable by a method according to the present invention.

The present invention also relates to the use of the vegetable material according to the present invention as a feed for ruminants or for preparing a mixed feed for ruminants.

## Definitions

The following definitions are used in the present description.

"Feed grade polar substance" as used in the present application means: a polar substance that is feed grade. With "feed grade" is meant a material that is safe, functional, handled and labeled appropriately for its intended use in animal food; as stipulated to by EFSA (European Food Safety Authority). In other words, suitable for animal food (or feed).

"Residual vegetable material" as used in the present application means: a material that remains after a raw vegetable material has been processed for obtaining one or more primary products; for example: a residue after processing of grains or tubers; or a residue after use of vegetable materials for obtaining biofuels, such as the so-called dried distillers grains and solubles (DDGS).

"Meal" as used in the present application means: the residual vegetable material that remains after processing of grains. It is a by-product obtained after either chemical extraction of oil (extracted meal) or after pressing to obtain oil (expeller meal). Meal according to the present invention includes both extracted meal and expeller meal.

"Radio frequency treatment" or "RF treatment" or "RF heating" as used in the present application means: subjecting a material to an alternating electromagnetic field of RF radiation. With radio frequency treatment the polarity of the electric field is changed several million times per second. This quick reversal and constant realignment of molecules within the product will generate heat (thermal energy).

"Indirect heating" as used in the present application means: a heating method in which heat is generated externally to a material and is then transferred to its external surface by conduction, convection and/or radiation.

"Direct heating" as used in the present application means: a heating method in which heat is generated within a material itself, such as radio frequency (RF) heating.

"rumen resistant fraction" as used in the present application means: the fraction of the feed material that passes the rumen without being degraded. This is sometimes also called rumen undegraded fraction.

"in situ nylon bag technique": is the standard technique used for measuring the degradation of materials in the rumen and/or the intestines. In this technique nylon bags filled with a material are introduced into the rumen and/or the intestines of cows.

"processing time", ($t_p$) as used in the present application means: the time needed for bringing a material from an initial temperature, for example room temperature, to a final temperature ($T_f$) by using RF radiation.

"holding time", ($t_h$) as used in the present application means: the time during which a material is hold at a specific temperature, by means of, for example an oven and/or by adjusting the power of the RF radiation.

"dielectric constant" sometimes also called relative permittivity or specific inductive capacity, of a material is the absolute permittivity expressed as a ratio relative to the permittivity of vacuum. It is typically denoted as $\varepsilon_r(\omega)$ (sometimes $\kappa$ or K) and is defined as:

$$\varepsilon_r(\omega) = \frac{\varepsilon(\omega)}{\varepsilon_0}$$

where $\varepsilon(\omega)$ is the complex frequency-dependent absolute permittivity of the material, and $\varepsilon_0$ is the vacuum permittivity. The dielectric constant is equal to the ratio of the capacitance of a capacitor filled with the given material to the capacitance of an identical capacitor in vacuum without the dielectric material. The value of the dielectric constant for air is nearly the same as that for a vacuum, and in practice the dielectric constants of liquids and solids may be determined by using the value when the capacitor is filled with air for $\varepsilon_0$.The dielectric constant is a number without dimensions.

"Molasses" as used in the present application means: a viscous by-product of refining sugarcane or sugar beets into sugar. It can vary in amount of sugar, method of extraction, and age of plant. It is primarily used for sweetening and flavoring food.

"Vinasses" as used in the present application means: a byproduct of bioethanol production in the sugar industry. It is produced during fermentation of sugar (e.g. from molasses) to ethanol or other products. After removal of the desired product, the remaining material is called vinasse.

## Detailed description of the invention

### Radio frequency

RF radiation has working frequencies in the range of tens of megahertz. The frequency most commonly used in industrial equipment is about 27 MHz, corresponding to a wavelength of about 11m; however a frequency of about 13 MHz is also often used. Radio frequencies can be used to endogenously heat a large volume of a product, viz. layers in the range of a meter. On the contrary, microwaves can penetrate only small layers, in the range of centimeters.

By using radio frequency, the energy for the required treatment is applied by a couple of electrodes, whose geometry is designed and set according to the product shape and size, receiving such energy from the generator. The electrodes are in fact the opposite plates of a capacitor and the product between them is the dielectric which, depending on its physical-chemical characteristics, absorbs the energy evenly and diffusely, notwithstanding its shape and size. Radio frequency treatment is a direct heating method.

The present invention typically uses RF that are in the so-called industrial, scientific and medical (ISM) radio bands (portions of the radio spectrum) which are reserved internationally for industrial, scientific and medical purposes other than telecommunications. The ISM bands are defined by the ITU-R in 5.138, 5.150, and 5.280 of the Radio Regulations. In the present method the range of radio frequency radiation (radio waves) is between 10 MHz and 50 MHz. In an embodiment of the present method, the range of radio frequency radiation (radio waves) is 27.12 MHz ±0.6 % (between 26.957 MHz and 27.283 MHz). In another specific embodiment, the RF is 13.56 MHz ±0.05 % (between 13.553 MHz and 13.567 MHz). In another specific embodiment, the RF is 40.68 MHz ±0.05 % (between 40.66 MHz and 40.7 MHz).

It should be noted that typically an apparatus is set to one specific radio frequency with a certain variation range. The used working frequency depends on the regulations of each country as shown above. For the Netherlands, in 2015, the allowed radio frequency is set to 27.12 MHz ±0.6 %.

In an embodiment, the vegetable starting material is heated by means of said radiation to a final temperature of between 110°C and 170°C, more preferably between 110°C and 165°C, such as between 120 °C and 165 °C, even more preferably between 130°C and 165°C, most preferably between 130°C and 150°C. These temperatures are the temperatures of the vegetable material. These temperatures are reached after radiation is applied to the material which increases the temperature of the material. The radiation is applied in such a manner that the final temperature that the material reaches is the temperature specified above. The temperature is measured using known means, e.g. an optical fiber at one or more locations in the material during irradiation.

The duration of the RF treatment (processing time) as well as the holding time depends i.a. on the equipment used, the amount of material to be treated, the type and amount of additive that is added. The desired duration (processing time as well as holding time) may be set by a person skilled in the art using e.g. the above variables. If for whatever reason a certain holding time is desired. It is within the scope of the invention to apply such a holding time after the RF treatment. The duration of the irradiation according to the invention is preferably at least 5 minutes. As a non-limiting example, the duration of the irradiation is between 5 minutes and 1.5 hours, preferably between 5 minutes and 60 minutes (1 hour), such as between 10 minutes and 50 minutes, more preferably between 10 minutes and 40 minutes, such as between 10 and 45 or between 15 minutes and 35 minutes such as between 15 minutes and 30 minutes. However, based on the settings and efficiency of the apparatus used, the intensity of the radiation, the amount of material irradiated and other factors, a person skilled in the art may be able to determine an optimal duration based on the final temperature desired. The power or intensity of the radiation may also vary and is partly dependent on the treated product and the efficiency of the apparatus used. It may for example be between 0.1 and 0.2 kWh/kg starting material.

## Additives

Additives used in the method according to the present invention is preferably a feed grade polar substance.

A polar substance is formed by molecules having an electrical dipole moment; therefore, these molecules can align themselves in an electromagnetic field. When this field is oscillating, like the field created by the RF treatment according to the invention, these molecules also oscillates generating heat.

A feed grade polar substance, is then a polar substance that is suitable for animal feed.

Wherein is it stated in the description and the claims that the additive "comprises" it is meant that preferably at 50 wt. % of said additive consists of said compound, more preferably at least 60 wt.% or at least 70 wt.%, at least 80 wt.% or at least 90 w.t%, more preferably at least 95 wt.% or even at least 99 wt.% in which case "comprises" can be read as "consists of" or "is".

In an embodiment the additive comprises a sugar. In an embodiment, the additive is selected from the group consisting of allyl alcohol, diacetone alcohol, glycerol-water, glycol, hexanol, methanol, molasses, pentanol, viscose, vinasses, sorbitol, xylitol.

The polar substance used in the method according to the present invention has a boiling point above 90 °C or above 100 °C , preferably above 110 °C; preferably above 130 °C, such as above 150°C, even more preferably above 180 °C, such as above 200°C, most preferably above 230°C, such as above 250°C.

Therefore, the polar substance preferably has a boiling point that is equal or higher than the desired (target) temperature by subjecting the vegetable material to the RF radiation. Furthermore, is preferred to add the polar substance, before or during subjecting the vegetable material to heating. The additive may be added in solid state or it may be added in a liquid state.

In an embodiment the additive comprises one or more alkane polyols, i.e. alkanes containing two or more

hydroxyl (-OH) groups. Preferably, this one or more alkane polyols have a carbon chain of between C3 and C6, more preferably having the molecular formula $C_xH(_{2x+2})O_x$. Non-limiting examples of alkane polyols having a carbon chain of between C3 and C6 are glycerol, sorbitol and xylitol.

Glycerol (propane-1,2,3-triol) has a melting point of 17.8 °C and a boiling point of 290 °C. It has the molecular formula $C_3H_8O_3$ and the following structure:

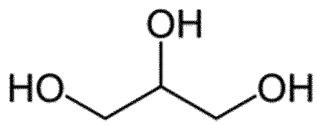

Xylitol ((2S,4R)-pentane-1,2,3,4,5-pentol) has a melting point of 92 °C and a boiling point of 216 °C. It has the molecular formula $C_5H_{12}O_5$ and the following structure:

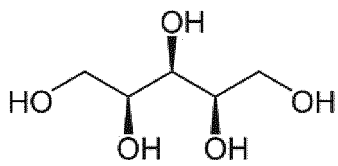

Sorbitol ((2S,3R,4R,5R)-Hexane-1,2,3,4,5,6-hexol) has a melting point of 95 °C and a boiling point of 296 °C. It has the molecular formula $C_6H_{14}O_6$ and the following structure:

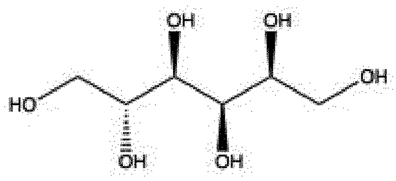

The additive used in the method according to the invention is added during subjecting the vegetable material to heating at a temperature of at most 95°C, such as at most 90°C, more preferably at most 80°C, such as at most 70°C, even more preferably at most 60°C, such as at most 50°C, most preferably at most 40°C, such as at most 30°C or at most ambient temperature (25 °C).

As non limiting examples, the combination of additive and vegetable material comprises between 0.1 and 20 wt.% of the additive, preferably between 0.5 and 20 wt.% of the additive, more preferably between 1 and 15 wt.% of the additive, even more preferably between 1.5 and 15 wt.% of the additive, most preferably between 2 and 10 wt.% of the additive, based on the combined weight of the additive and the vegetable material.

There may be more than one additive present in which case the amounts cited here relate to the combination of additives.

The additive may be added prior to the application of RF radiation. The additive may also be added during the heating process, viz. when RF radiation has already been applied. The present inventors have observed that the earlier the additive is added (e.g. prior to heating or prior to the vegetable material having a temperature of at most 60 °C, preferably at most 50 °C, more preferably at most 40°C, most preferably at most 30 °C, the more pronounced the effect of reduction in time is.

## Vegetable materials for use as starting material

The vegetable material used in the method according to the present invention is preferably selected from grains, tubers and residual vegetable materials and one or more combinations thereof. It should be noted that "grains" also include "seeds" as discussed below in the section regarding grains.

### *Grains as starting material*

Grains may be used as starting material for the present method. In other words, grains may be subjected to a radiation treatment using RF radiation.

In an embodiment, the grains are selected from the group consisting of cereal grains, legumes and oilseeds.

In an embodiment, the cereal grains may be selected from the group consisting of barley, oats, rice, rye, spelt, teff, triticale, wheat, corn, sorghum, and millet. Other cereal grains known in the art may also be used. These may be used as such or in the form of granulates, flakes, or ground or other forms.

In an embodiment, the legumes (also called pulses) may be selected from the group consisting of soybeans, (sweet) lupines, fava beans, peas, chickpeas, common beans, and lentils. Other legumes known in the art may also be used. These may be used as such or in the form of granulates, flakes, or ground or other forms.

In an embodiment, oilseeds may be selected from the group consisting of rapeseed (including canola), safflower seed, sunflower seed, flax seed (also called linseed). Other oilseeds known in the art may also be used. These may be used as such or in the form of granulates, flakes, or ground or other forms.

In an embodiment, the grains according to the present invention that are subjected to RF radiation are selected from the group consisting of: corn, soybeans, rapeseed, wheat, barley and one or more combinations thereof. These may be used as such or in the form of granulates, flakes, or ground or other forms.

***Tubers as starting material***

In another embodiment, tubers may be used as starting materials, examples of stem tubers such as potatoes and yams, and root tubers, such as sweet potato, cassava and combinations thereof.

***Residual vegetable material as starting material***

Residual vegetable material may be used as starting material for the present method. In other words, residual vegetable materials may be subjected to a radiation treatment using RF radiation.

In an embodiment, the residual vegetable material is residue of grain processing, preferably a residue of processing of rapeseed, soybeans, wheat, barley or corn and one or more combinations thereof, more preferably rapeseed meal, soybean meal, sunflower seed meal, corn gluten feed, wheat middlings, and one or more combinations thereof.

In another embodiment, the residual vegetable material is a residue of tuber processing, preferably a residue of processing potatoes, yams, sweet potato, cassava (to obtain tapioca), and combinations thereof.

In another embodiment the residual vegetable materials comprises residue after use of vegetable materials for obtaining biofuels, so called DDGS , e.g. DDGS corn.

In another embodiment the residual vegetable materials comprise dried roughages like grassmeal (dehydrated) and alfalfa meal (dehydrated) or pellets of these materials.

**Nutritional value of vegetable materials**

The vegetable materials used as starting materials in the method according to the present invention have varying compositions. The method according to the invention is suitable for them all. The results of the treatment with RF differs when different starting materials are used.

Some materials, for example most residual materials, have a relatively high protein content and a small starch content. Some materials, for example, cereal grains, have a relatively high starch content and a low protein content. Other materials, for example oilseeds, have a relatively high protein and fat content. In the following more information is provided regarding the increase in nutritional value of proteins, starch and fat of the starting material. The present method is capable of increasing the nutritional value of one or more of these components, protein, starch and fat.

In an embodiment, the Aufrère value, representing the in vitro rumen undegraded protein content of the vegetable material, has increased with between 2 and 60 percentage units, such as between 10 and 45 percentage units, or between 2 and 20, or between 10 and 60 or even between 30 to 60 percentage units.

In an embodiment, the vitro ileal protein digestibility (VIPD), which gives an indication of the protein fraction that is enzymatically degraded in the small intestine, has decreased with no more than 30 percentage units, preferably no more than 20 or no more than 10, or even no more than 5 percentage units. In another embodiment, the VIPD has increased with at least 1 %, preferably with at least 2 percentage units or at least 5 percentage units.

In an embodiment, the in situ intestinal digestibility measurement (dRUP) either has increased by 0 to 75, e.g. 0 to 10 or even 0 to 3 percentage units or by 2 to 10 percentage units. The dRUP at least decreased by no more than 20, preferably 10 percentage units.

In an embodiment, the RUS value increases by between 5 and 50 percentage units, such as between 10 and 30 percentage units.

In an embodiment, the RUF value increases by between 5 and 50 percentage units, such as between 10 and 30 percentage units.

***Increasing nutritional value of protein***

The present invention relates to the improvement of the nutritional value of vegetable materials, e.g. comprising proteins. Vegetable materials that are considered to be protein-containing are grains and residual material. The protein content of these starting materials may vary between 6 and 50 wt.% based on dry matter for grains and between 10 and 90 wt.% based on dry matter for residual materials. However, starting materials having other protein contents may also be used. The protein content of the starting material is not limiting for the present invention.

Typically, the method according to the present invention does not alter the total protein content of the product. Due to the heating water will evaporate so the protein content is determined on dry matter base (also called based on the dry fraction of the product).

The RF treatment method according to the present invention has an effect on increasing the nutritional value for ruminants for example by decreasing the protein solubility and by increasing the protein fraction that is resistant to microbial degradation in the rumen; therefore passing to the small intestine leading to a higher absorbable protein value and a more efficient use of dietary protein.

The resistance to microbial degradation in the rumen of a ruminant is determined in sacco by the so-called RUP test (rumen undegraded protein). These test are however complicated and costly and therefore the present inventors propose an in vitro protein rumen degradation test (also called Aufrère test) that is able to predict the RUP results. This reduces costs and allows an easy test to see if one RF treatment is more or less successful than another RF treatment. In an embodiment, the RUP increases by 10 to 60 percentage units.

In order to have a good estimate of the protein digestion in the small intestine, an in vitro ileal protein digestibility test (VIPD) is carried out. The VIPD value gives an indication of the protein fraction that is enzymatically degraded in the small intestine. It would therefore be beneficial if the VIPD value does not decrease - indicating no detrimental effect on protein digestion in the small intestine.

The increased nutritional value may be determined by comparing the protein fraction that is resistant to microbial degradation in the rumen and the protein fraction that is digestible in the intestine. The rumen resistance fraction can be estimated by in vitro Aufrère or in situ rumen degradation measurement (RUP) and the digestible fraction can be estimated by in vitro ileal protein digestibility (VIPD) or in situ intestinal digestibility measurement (dRUP).

The nutritional value may be determined by comparing the values of e.g. digestible protein on the starting material and on the RF treated product. The values of digestible protein or intestinal digestible protein are estimated based on rumen resistance fraction (estimated by Aufrère or *in situ* by RUP); and digestibility of the rumen resistant fraction in the intestine (estimated by vitro ileal protein digestibility (VIPD) or in situ digestibility measurements (dRUP). The digestibility of the feed in the small intestine which is directly related to the uptake of nutrients by the animal is determined by determining the amount of protein that is digested in the intestine.

The higher the temperature used (within a certain range as specified above), the larger the effect on increasing the nutritional value of the protein It was surprisingly found by the present inventor that the overall nutritional value still increased due to the increased RUP.

<u>Embodiments for soybean meal, extracted</u>

Untreated soybean meal, extracted typically has an Aufrère value of between 30 and 55 %, such as between 40 and 53 % depending on production conditions in the extraction plant. It is desired to obtain an Aufrère value of between 60 and 80 %, such as between 60 and 70 %, after the treatment of the present invention. In an embodiment, soybean meal, extracted is used as vegetable material and wherein the Aufrère value has increased with 10 to 45 percentage units, such as 20 to 30 percentage units. In an embodiment, soybean meal, extracted is used as vegetable material and wherein the vitro ileal protein digestibility (VIPD) has decreased with no more than 30 percentage units, preferably less than 20 percentage, preferably less than 10 percentage units. In an embodiment, soybean meal, extracted is used as vegetable material and wherein the Aufrère value has increased with 20 to 45 percentage units, such as 20 to 30 percentage units, and wherein the vitro ileal protein digestibility (VIPD) has decreased with no more than 30 percentage units, preferably less than 20 percentage, preferably less than 10 percentage units. In an embodiment, the RUP increases by 10 to 60 percentage units. In an embodiment, the dRUP increases by 0 to 3 percentage units, such as between 1 to 3 percentage units. In an embodiment, the dRUP decreases by at most more than 10 percentage units, preferably by at most 5 percentage units.

<u>Embodiments for rapeseed meal, extracted</u>

Untreated rapeseed meal, extracted typically has an Aufrère value of between 60 and 65%, depending on production conditions in the extraction plant. It is desired to obtain an Aufrère value of between 70 and 85%, such as between 70 and 75%, after the treatment of the present invention. In an embodiment, rapeseed meal, extracted is used

as vegetable material and wherein the Aufrère value has increased with 5 to 20 percentage units, such as 5 to 10 or even to 15 percentage units. In an embodiment, rapeseed meal, extracted is used as vegetable material and wherein the vitro ileal protein digestibility (VIPD) has decreased with no more than 30 percentage units, preferably less than 20 percentage, preferably less than 10 percentage units. In an embodiment, rapeseed meal, extracted is used as vegetable material and wherein the Aufrère value has increased with 5 to 20 percentage units, such as 5 to 10 or even to 15 percentage units, and wherein the vitro ileal protein digestibility (VIPD) has decreased with no more than 30 percentage units, preferably less than 20 percentage, preferably less than 10 percentage units. In an embodiment, the RUP increases by 10 to 60 percentage units. In In an embodiment, the dRUP value increases by 0 to 10 percentage units, for example between 4 and 7 percentage units.

Embodiments for rapeseed meal, expeller

Untreated rapeseed meal, expeller typically has an Aufrère value of between 20 and 35%, depending on production conditions in the extraction plant. It is desired to obtain an Aufrère value of between 60 and 85%, such as between 60 to 65%, after the treatment of the present invention. In an embodiment, rapeseed meal, expeller is used as vegetable material and wherein the Aufrère value has increased with 10 to 60 percentage units, such as 25 to 45 percentage units; for example 30 to 35 percentage units. In an embodiment, rapeseed meal, expeller is used as vegetable material and wherein the vitro ileal protein digestibility (VIPD) has decreased with no more than 30 percentage units, preferably less than 20 percentage, preferably less than 10 percentage units. In an embodiment, rapeseed meal, expeller is used as vegetable material and wherein the vitro ileal protein digestibility (VIPD) has increased with 0 to 4 percentage units. In an embodiment, rapeseed meal, expeller is used as vegetable material and wherein the Aufrère value has increased with 10 to 60 percentage units, such as 25 to 45 percentage units; for example 30 to 35 percentage units, and wherein the vitro ileal protein digestibility (VIPD) has decreased with no more than 30 percentage units. In an embodiment, the RUP increases by 10 to 60 percentage units. In an embodiment, the dRUP value increases by 10 to 75 percentage units, preferably by 20 to 60 percentage units.

Embodiments for whole soybeans

Untreated soybeans typically have an Aufrère value of between 10 and 20 %. It is desired to obtain an Aufrère value of between 40 and 75%, preferably between 50 % and 65 % after the treatment of the present invention. In an embodiment, soybeans are used as vegetable material and wherein the Aufrère value has increased with 30 to 60 percentage units, such as 30 to 55 or 40 to 60 percentage units; for example 40 to 55 percentage units. In an embodiment, soybeans are used as vegetable material and wherein the vitro ileal protein digestibility (VIPD) has decreased with no more than 30 percentage units, preferably less than 20 percentage, preferably less than 10 percentage units. In an embodiment, soybeans are used as vegetable material and wherein the Aufrère value has increased with 30 to 60 percentage units, such as 40 to 60 percentage units; for example 40 to 55 percentage units, and wherein the vitro ileal protein digestibility (VIPD) has decreased with no more than 30 percentage units, preferably less than 20 percentage, preferably less than 10 percentage units. In an embodiment, the dRUP increases by 0 to 5 percentage units. In an embodiment, the dRUP increases by at most more than 10 percentage units, preferably by at most 5 percentage units.

Embodiments for whole corn

Untreated corn typically has an Aufrère value of between 70 to 75 %. It is desired to obtain an Aufrère value of between 75 % and 85 % after the treatment of the present invention. In an embodiment, corn is used as vegetable material and wherein the Aufrère value has increased with 10 to 35 percentage units; such as between 10 to 20 percentage units; for example, 15 to 20 percentage units. In an embodiment, corn is used as vegetable material and wherein the vitro ileal protein digestibility (VIPD) has decreased with no more than 30 percentage units, preferably less than 20 percentage, preferably less than 10 percentage units. In an embodiment, corn is used as vegetable material and wherein the vitro ileal protein digestibility (VIPD) has increased with at least 5 percentage units. In an embodiment, the RUP increases by 10 to 50 percentage units. In an embodiment, the dRUP increases by 0 to 3 percentage units. In an embodiment, the dRUP decreases by at most more than 20 percentage units, preferably by at most 10 percentage units.

Embodiments for whole wheat

Untreated wheat typically has an Aufrère value of between 45 and 55 %. It is desired to obtain an Aufrère value of between 55 % and 70%, such as between 60 % and 70 %, after the treatment of the present invention. In an embodiment, wheat is used as vegetable material and wherein the Aufrère value has increased with 5 to 25 percentage units, such as 5 to 20 percentage units; for example, 10 to 15 percentage units. In an embodiment, wheat is used as vegetable

material and wherein the vitro ileal protein digestibility (VIPD) has decreased with no more than 30 percentage units, preferably less than 20 percentage, preferably less than 10 or even 5 percentage units. In an embodiment, wheat is used as vegetable material and wherein the vitro ileal protein digestibility (VIPD) has increased with at least 5 percentage units. In an embodiment, the RUP increases by 10 to 50 percentage units. In an embodiment, the dRUP increases by 0 to 40 percentage units, preferably 10 to 30 percentage units.

Embodiments for whole barley

Untreated barley typically has an Aufrère value of between 55 and 65 %. It is desired to obtain an Aufrère value of between 70 % and 85 %, after the treatment of the present invention. In an embodiment, barley is used as vegetable material and wherein the Aufrère value has increased with 5 to 25 percentage units, such as 5 to 20 percentage units; for example, 10 to 15 percentage units. In an embodiment, barley is used as vegetable material and wherein the vitro ileal protein digestibility (VIPD) has decreased with no more than 30 percentage units, preferably less than 20 percentage, preferably less than 10 percentage units. In an embodiment, barley is used as vegetable material and wherein the Aufrère value has increased with 5 to 25 percentage units, such as 5 to 20 percentage units; for example, 10 to 15 percentage units, and wherein the vitro ileal protein digestibility (VIPD) has decreased with no more than 30 percentage units, preferably less than 20 percentage, preferably less than 10 percentage units. In an embodiment, the RUP increases by 10 to 50 percentage units. In an embodiment, the dRUP increases by 0 to 40 percentage units, preferably by 10 to 30 percentage units.

***Increasing nutritional value of starch***

In addition to feed ingredients comprising protein several feed materials also comprise starch. It was surprisingly found by the present inventor that the RF heating also has a beneficial effect on starch. It is therefore also an aspect of the present invention to use RF heating for increasing the nutritional starch value of vegetable materials.

Vegetable materials that are considered to be protein- and starch-containing are the following: cereal grains, most legumes, tubers and residues thereof. The protein content of these materials may vary between 8 and 70 wt.% based on dry matter. The starch content of these starting materials may vary between 12 and 80 wt.% based on dry matter. However, starting materials having other starch and/or protein contents may also be used. The starch and/or protein content of the starting material is not limiting for the present invention.

Typically, the method according to the present invention does not alter the total protein and/or starch content of the product. Due to the heating water will evaporate so the protein and/or starch content is determined on dry matter base.

In most Dutch feed evaluation systems the value of dietary starch is increased when more starch escapes degradation in the rumen and is enzymatically digested in the small intestine. Starch is hydrolyzed into glucose molecules and these are absorbed in the small intestine and serve as glucogenic nutrients generally leading to a more efficient milk (protein) production. It would therefore be beneficial if the rumen undegradable starch (RUS) fraction is increased without detrimental effects on starch digestion in the small intestine.

Embodiments for whole wheat

In an embodiment, for wheat the starting material typically has a RUS value of between 5 and 15 %, such as between 5 and 10 %. It is desired to achieve a RUS value after the RF treatment of between 20 and 55 %, such as between 25 and 40 %. An increase of 10 to 50 percentage units, such as between 10 to 35 percentage units is desired.

Embodiments for whole corn

In an embodiment, for corn the starting material typically has a RUS value of between 30 and 55 %, such as between 30 and 45 %; for example between 30 and 35%. It is desired to achieve a RUS value after the RF treatment of between 40 and 75 %, such as between 40 and 55%. An increase of 5 to 40, for example 5 to 30, such as between 5 to 25 percentage units is desired.

Embodiments for whole barley

In an embodiment, for barley the starting material typically has a RUS value of between 5 and 30%, such as between 5 and 15 %. It is desired to achieve a RUS value after the RF treatment of between 10 and 40%, such as between 20 and 30 %. An increase of 5 to 30 percentage units, such as between 5 to 20 percentage units is desired.

***Increasing nutritional value of fat***

In addition to feed ingredients comprising protein or starch several feed materials also comprise fat. It was surprisingly found by the present inventor that the RF heating also has a beneficial effect on fat. It is therefore also an aspect of the present invention to use RF heating for increasing the nutritional fat value of vegetable materials.

Vegetable materials that are considered to be protein- and fat-containing are the following: soybeans, rapeseed, linseed (flaxseed), safflower seed and sunflower seed. The protein content of these materials may vary between 10 and 40 wt.% based on dry matter. The fat content of these starting materials may vary between 20 and 50 wt.% based on dry matter. However, starting materials having other fat and/or protein contents may also be used. The fat and/or protein content of the starting material is not limiting for the present invention.

Typically, the method according to the present invention does not alter the total protein and/or fat content of the product. Due to the RF heating water will evaporate so the protein and/or fat content is determined on dry matter base. It would be beneficial if the rumen undegradable fat (RUF) fraction is increased without detrimental effects on fat digestion in the small intestine.

The value of dietary fat is increased when fat is protected in the rumen.

Embodiments whole soybeans

In an embodiment, for soybeans the starting material typically has rumen undegradable fat (RUF) value after 16 h incubation in the rumen of between 5 and 30%, such as between 5 and 15 %. It is desired to achieve a RUF (16h) value after the RF treatment of between 15 and 60 %, such as between 30 and 45 %. An increase of 10 to 60 percentage units, such as between 15 to 40 percentage units is desired.

**Analyses**

***Chemical analyses***

Several chemical analyses have been carried out in laboratories in order to provide information about the starting materials as well as the products. These techniques will be discussed in more detail below.

Moisture content: this relates to the amount of water. There is a difference in the moisture content of the starting material and the product since due to the heating water is evaporated. The moisture content of the starting material depends on the type and source of the starting material. The moisture content is determined using the method according to the EU Regulation (EC) No. 152/2009, Annex III, L54/12-14 (2009).

Crude protein content: The protein content is determined using the so-called crude protein method (N x 6.25). The protein content may be determined for both the starting material and/or the product. The determination is done based on the assumption that proteins contain 16 percent Nitrogen. The analysis is carried out using the method described in the EU Regulation (EC) No. 152/2009, Annex III, L54/15-19 (2009).

Starch content: the starch content is determined using ISO 15914:2004 "Enzymatic determination of total starch content". The starch content is determined for both the starting material and/or the product.

Fat content: EU guideline 152/2009 27 January 2009; appendix III H L54 137-39.

***In vitro analyses***

Several in vitro analyses have been carried out in laboratories in order to give an estimate of the increase in the nutritional value of the RF treated vegetable materials according to the invention. These techniques simulate the behavior of nutrients in the animal and they will be discussed in more detail below.

in vitro protein rumen degradation: The Aufrère test is used, which is a standardized enzymatic laboratory technique to determine protein degradability in order to evaluate and predict the rumen degradability of various protein sources (Aufrère and Cartailler, 1988; Aufrère et al., 1991; Cone et al., 1996).. In the present invention the Aufrère method is used as specified here:

This test is based on the measurement of protein hydrolysis. Samples are hydrolyzed with a protease in a basic buffer. A borate-phosphate buffer (pH 8.0) is prepared using 21.6 g of sodium dihydrogen phosphate and 17.8 g of sodium tetraborate dissolved in 1.5 L of water wherein the pH is adjusted using 4M NaOH. A 10 mg/ml tetracycline solution in said buffer is prepared. A solution of 12.3 mg of protease (of Streptomyces griseus), 10 mg of nystatin suspended in a small amount of the borate-phosphate buffer, 10 ml of the tetracycline solution are mixed with buffer to reach 1 liter. The enzyme-solution should be brought to 40°C and approx. 500 mg of the sample to be measured is precisely weighted in a glass container and 50 ml of the enzyme-solution is added. As a blank only the enzyme-solution without sample is taken. The samples are incubated for a period of 24 hours at 40 °C in a water bath. The sample is mildly agitated at 1,

6 and 23 hours during 4 minutes at 60 rpm. The glass containing with sample is carefully transferred to an ice bath for 10 minutes and then the sample is filtered over a paper filter. Of the filtrate 25 ml is taken and two Kjeldahl C tablets (5 g $K_2SO_4$ + 0.1 g $CuSO_45H_2O$) and 20 ml of 96 % sulfuric acid is added to destruct the amino acids. This is heated/evaporated at 150 °C during 1 night. The amount of remaining nitrogen in the sample is determined using the Kjeldahl method using a Kjeltec 2400KT off Foss according to EU Regulation (EC) No. 152/2009, Annex III, L54/15-19 (2009). To calibrate for a specific batch of protease used a sample having a known amount of nitrogen should be tested.

vitro ileal protein digestibility (VIPD): This feature relates to the digestibility of protein in the small intestine of animals. This test comprises a standardized enzymatic laboratory treatment of the vegetable material, and the in vitro ileal protein digestibility of the vegetable material is then given by the protein fraction of the material that is dissolved by the enzymatic treatment.

In the present invention the VIPD test is performed at 39 ± 0.5 °C, and it comprises two main phases, viz. 1) simulation of the stomach; it involves protein digestion by pepsin at pH 3 during 1 hour; 2) simulation of the small intestine; it involves protein digestion by pancreatin (including amylase, chymotrypsin, trypsin and lipase activity) at pH 6,5 during 2 hours.

The specific steps of this test are the following:

(i) preparing a suspension of 1 g of the vegetable material to be tested and 40 mL of an aqueous pepsin solution with a concentration of 0.081% m/v;
(ii) mixing the amount of 1M hydrochloric acid needed for acidifying the suspension to pH 3.0;
(iii) allowing the suspension to react during 1 hour at around 39°C by agitated every 15 minutes with a glass rod;
(iv) adding 2.5 ml 1M phosphate buffer pH 6.6 and 2.5 ml of a suspension prepared using 24 g pancreatin (pork) and 0.15 g bile salts in 150 ml water;
(v) allowing the suspension to react during 2 hours at around 39°C by agitated every 15 minutes with a glass rod;
(vi) adding 5 ml 10%w/v sodium carbonate solution and agitated with a glass rod;
(vii) filtrating the suspension over a P-2 glass filter (with about 1.5 cm Filteraid® on top of the filter);
(viii) supplement the filtrate with water to obtain a total volume of 250 ml and mix;
(ix) mixing 50 ml of the filtrate, two Kjeldahl C tablets (5 g $K_2SO_4$ + 0.1 g $CuSO_45H_2O$) and add 20 ml of 96% sulfuric acid to destruct the protein. This is heated/evaporated at 150°C during 1 night;
(x) determining the amount of nitrogen in the filtrated using the Kjedahl method using a Kjeltech 2400KT off Foss according to EU Regulation (EC) No. 152/2009, Annex III, L54/15-19 (2009);
(xi) to correct for the protein amount added by the used enzymes, a blank sample should be taken into the test;
(xii) vitro protein digestibility (VIPD) is then calculated as the relative amount of protein which has become solubilized during this test.

### *In situ (in sacco) analyses*

In situ analyses have been carried out in animals by specialized institutes.

*In situ* rumen degradation: the amount of a nutrient that is degraded (for example protein (RUP), starch (RUS) or fat (RUF)), after subjecting a sample of a material to the *in situ degradation* test, measured according to the Dutch 2003 Protocol for In Situ Rumen Incubations: Determination of Degradation Rate and Washable Fractions of Protein, Starch, Cell Walls and Organic Residual Fraction (Dutch: Protocol voor in situ pensincubatie: bepaling van afbraaksnelheid en uitwasbare fracties van eiwit, zetmeel, celwanden en organische restfractie; 10 december 2003, Centraal Veevoederbureau, Lelystad, pages 1-14). The amount of the nutrient that is not degraded in this test is defined as rumen undegradable; viz. RUP for Rumen Undegradable Protein, RUS for Rumen Undegradable Starch, and RUF for Rumen Undegradable Fat. An in situ nylon bag technique is used for this method. Test cows having a rumen cannula were used. At least 5 different incubation times in the rumen were used; 20 to 35 nylon bags were incubated per cow. After incubation in the rumen, the material containing nylon bags were brought into ice water; followed by freezing. Subsequently, after thawing the bags were washed using a standard washing machine with water at room temperature, without centrifugation. After washing the material containing nylon bags were freeze-dried. Residual material from the bags were pooled per animal and ground through 1 mm screens, the residues were analyzed for the specific nutrient content.

In situ intestinal digestibility (dRUP): this is the amount of protein that is digested in the intestines. The in situ nylon bag technique was used and as a starting point nylon bags were used that have undergone the in situ rumen protein degradation test (16 hours) and subsequent pepsin-HCl treatment to resemble passage through the abomasum. The present in situ study provides valuable information about the amount of protein that is being taken up in the intestines; an increase in this value means an increase in the nutritional value of the feed material. The dRUP is expressed in a percentage (%) of the amount of RUP and is estimated using the method disclosed in Animal (2014), 8:11, pp 1839-1850: "The energy and protein value of wheat, maize and blend DDGS for cattle and evaluation of predicting methods" by J. L. De Boever, M. C. Blok, S. Millet, J. Vanacker and S. De Campeneere. It is calculated per cow according to the equation

below:

$$\frac{(In(gram) * CPC) - (Out(gram) * CPC)}{In(gram) * CPC}$$

Wherein "In(gram)" is the sum of all the weighed rumen residues, being the contents of the nylon bags that remained after the in situ rumen protein degradation test (16 h) in grams. Wherein the CPC stands for crude protein content and is the fraction of the total weight that is protein (e.g. a protein content of 16% gives a CPC of 0.16). Wherein "out(gram) is the sum of all the weighed intestinal residues, being the contents of the mobile nylon bags that remained after the in situ intestinal digestibility test in grams. Cows having a T-cannula in the upper part of the duodenum were used. Ten bags were incubated per residue per cow.

Immediately before insertion in the duodenum, bags were soaked in a pepsin-0.1 N HCl-solution at 39 °C to simulate digestion in the abomasum. Every 20 min four bags were incubated in the duodenum. After passage through the intestines, bags were almost directly recuperated from the feces, rinsed and frozen. After thawing, they were intensively machine-washed at least four times using water at 40°C and finally spinning at 700 rpm. After freeze-drying, pooling per animal and grinding through 1 mm, the residues were analyzed for crude protein content.

**Use of product**

The present invention relates to a method for increasing the nutritional value, preferably protein, starch and/or fat value, of a vegetable material by treating the starting material with RF heating and using an additive during said heating.

The vegetable material that is treated according to the method of the present invention, the product, may be used as a feed for ruminants. The feed according to the present invention has an increased nutritional value for ruminants, especially a better resistance to the rumen and due to a shift of digestion from the rumen to the intestines it increases the utilization of protein, starch and fat. As non-limiting examples of ruminants are mentioned dairy cows, beef cattle, goats, and sheep.

**Examples**

As specified above, the present invention is related to a method for increasing the nutritional value of a residual vegetable material while using an additive. In order to increase the nutritional value of said residual vegetable material, said material is heated with an additive by means of radiation in the radio frequency range.

In the section below the examples are numbered according to the vegetable material used. Examples 1 use soybean meal, Examples with an asterisk are comparative examples that are untreated, this is denoted with "-" in the column of Final Temperature.

In all examples, the vegetable material was subjected to radiation in the radio frequency range, at a frequency of 27.12 MHz. The maximum temperature to which samples were heated by RF radiation is called the 'Final Temperature' ($T_f$), and the time needed to reach said 'Final Temperature', or the irradiation time is called the 'Processing Time' ($t_p$). During this processing time the vegetable material is irradiated with RF. It should be noted that, at constant settings of the RF equipment. The longer the processing time, the higher the final temperature.

*Example 1*

In the examples 1, two kilograms of a soy bean meal were subjected to RF radiation and different amounts of glycerol were added to the soy bean meal, before subjecting the material to RF radiation. The concentration of glycerol in the combination of soy bean meal and glycerol is: 0.0% (a); 1.7 wt.% (b); 3.3 wt.% (c), 6.7 wt.% (d) and 10.0 wt.% (e). These experiments show the effect of the addition of a polar feed grade additive in the time needed to achieve the desired final temperature. In addition, these experiments also show the effect of the RF treatment on the nutritional value and show the effect of different final temperatures/processing times. Moreover, these experiments show that the addition of a polar feed grade additive does not have a negative effect in the obtained Aufrère value. For each of these examples the Aufrère value (percentage units %) and the VIPD were determined for untreated material (*); the comparative examples; and after RF treatment to four different final temperatures: 110°C, 130°C, 150°C, and 170°C. The results are shown in Tables 1a-1c below.

From Table 1a it is clear that for soybean meal (Example 1), when a polar feed grade additive is added, the processing time ($t_p$) is reduced, as compared with a soybean meal to which no additive has been added. Moreover, from Table 1b it is clear that for soybean meal (Example 1), the Aufrère value increases significantly with increasing final temperature. Furthermore, from Table 1c is clear that the addition of a polar feed grade additive does not have a negative

effect in the obtained Aufrère value.

Table 1a

| | | | Processing time $t_p$ (minutes) | | | |
|---|---|---|---|---|---|---|
| Ex. | Material# | % glycerol | $T_f$ = 110°C | $T_f$ = 130 °C | $T_f$ = 150 °C | $T_f$ = 170°C |
| 1a | SBM | 0 | 10 | 24 | 26 | 38 |
| 1b | SBM | 1.7 | 6 | 12 | 17 | 25 |
| 1c | SBM | 3.3 | 6 | 11 | 16 | 21 |
| 1d | SBM | 6.7 | 5 | 9 | 14 | 15 |
| 1e | SBM | 10.0 | 5 | 7 | 11 | 14 |
| # SBM = Soybean meal. | | | | | | |

Table 1b

| | | | Aufrère (%) | | | | |
|---|---|---|---|---|---|---|---|
| Ex. | Material# | % glycerol | C* | $T_f$ = 110 °C | $T_f$ = 130 °C | $T_f$ = 150 °C | $T_f$ = 170°C |
| 1a | SBM | 0 | 41 | 40 | 56 | 70 | 75 |
| 1b | SBM | 1.7 | 40 | 44 | 56 | 68 | 76 |
| 1c | SBM | 3.3 | 42 | 43 | 58 | 69 | 75 |
| 1d | SBM | 6.7 | 42 | 45 | 60 | 69 | 73 |
| 1e | SBM | 10.0 | 42 | 47 | 60 | 70 | 73 |
| # SBM = Soybean meal; * C = samples not subjected to RF treatment | | | | | | | |

Table 1c

| | | | VIPD (%) | | | | |
|---|---|---|---|---|---|---|---|
| Ex. | Material# | % glycerol | C* | $T_f$ = 110 °C | $T_f$ = 130 °C | $T_f$ = 150 °C | $T_f$ = 170°C |
| 1a | SBM | 0 | 96 | | | 95 | 81 |
| 1b | SBM | 1.7 | | | | | 85 |
| 1c | SBM | 3.3 | | | | | 80 |
| 1d | SBM | 6.7 | | | | | 78 |
| 1e | SBM | 10.0 | | | | | 68 |
| # SBM = Soybean meal; * C = samples not subjected to RF treatment | | | | | | | |

From Table 1c it is clear that for soybean meal (Example 1), when a polar feed grade additive is added, the vitro ileal protein digestibility (VIPD) does not decrease with more than 30 percentage units.

*Example 2*

In the Examples 2, two kilograms of a soy bean meal or rapeseed meal were subjected to RF radiation and water was added to the soy bean meal in an amount of 1.1 wt.% to 11.5 wt.%, before subjecting the material to RF radiation; the values in the column related to the water content show the values for respectively a temperature of 90 °C, 110°C, 130°C and 150 °C, (viz. 1.1 / 2.3 / 7.75 / 11.5 wt.% for a temperature of 90 °C, 110°C, 130°C and 150 °C respectively for soy bean meal and 0.8 / 2.9 / 6.5 / 9.95 wt.% for rapeseed meal). These experiments show the effect of the addition of a polar feed grade additive in the time needed to achieve the desired final temperature. In addition,

these experiments also show the effect of the RF treatment on the nutritional value and show the effect of different final temperatures/processing times. Moreover, these experiments show that the addition of a polar feed grade additive does not have a negative effect in the obtained Aufrère value. For each of these examples the Aufrère value (percentage units %) after RF treatment to four different final temperatures: 90 °C, 110°C, 130°C, and 150°C. The results are shown in Tables 2a and 2b below.

From Table 2a it is clear that for soybean meal as well as rapeseed meal when water is added, the processing time is reduced. Table 2b shows the effect on the Aufrère value.

Table 2a

| | | | processing time (minutes) | | | |
|---|---|---|---|---|---|---|
| Ex. | Material# | % water | $T_f$ = 90°C | $T_f$ = 110 °C | $T_f$ = 130 °C | $T_f$ = 150°C |
| 2a* | SBM | 0 | 13.5 | 15.5 | 25.0 | 36.0 |
| 2b | SBM | 1.1 / 2.3 / 7.75 / 11.5 | 10.0 | 11.5 | 17.5 | 27.0 |
| 2c* | RSM | 0 | 8.5 | 11.5 | 19.5 | 30.0 |
| 2d | RSM | 0.8 / 2.9 / 6.5 / 9.95 | 8.0 | 8.0 | 17.0 | 21.5 |
| # SBM = Soybean meal, extracted. RSM = rapeseed meal, extracted | | | | | | |

Table 2b

| | | | Aufrère (%) | | | |
|---|---|---|---|---|---|---|
| Ex. | Material# | % water | $T_f$ = 90°C | $T_f$ = 110 °C | $T_f$ = 130 °C | $T_f$ = 150°C |
| 2a* | SBM | 0 | 39.1 | 43.4 | 61.1 | 70.3 |
| 2b | SBM | 1.1 / 2.3 / 7.75 / 11.5 | 41.3 | 43.1 | 63.6 | 72.6 |
| 2c* | RSM | 0 | 63.7 | 64.6 | 67.6 | 76.3 |
| 2d | RSM | 0.8 / 2.9 / 6.5 / 9.95 | 64.4 | 64.5 | 68.4 | 76.1 |
| # SBM = Soybean meal, extracted. RSM = rapeseed meal, extracted | | | | | | |

From the Examples it is clear that the method according to the present invention increases the nutritional value of the vegetable material that is treated. Moreover, from the Examples it is also clear that by adding a polar feed grade additive during of before the radio frequency treatment, the processing time is reduced. Furthermore, the addition of the additive does not have a negative effect in the increase of the nutritional value of the vegetable material that is treated. Hence one or more objects of the present invention are achieved by the present method which is further elucidated in the appended claims.

## Claims

1. A method for increasing the nutritional value for ruminants of a vegetable material by subjection of a vegetable material to heating by means of radiation in the radio frequency range to achieve a temperature of between 110°C and 180°C, wherein the range of the radio frequency radiation is between 10MHz and 50MHz, and wherein an additive is added to said vegetable material before or during subjecting said vegetable material to heating, wherein said additive is a feed grade polar substance, said additive comprising an alcohol, or an alkane polyol; to obtain an RF treated vegetable material in which:

   the Aufrère value, measured as described in the description, has increased, compared to the value of the vegetable material, with between 2 and 60 percentage units; and/or
   the RUS value, measured as described in the description, has increased, compared to the value of the vegetable material, by between 5 and 50 percentage units; and/or
   the RUF value, measured as described in the description, has increased, compared to the value of the vegetable material, by between 5 and 50 percentage units.

2. The method according to claim 1, wherein the additive has a dielectric constant above 5, preferably above 10, more preferably above 20, even more preferably above 30.

3. The method according to any one of the claims 1 or 2, wherein said additive has a boiling point above 90 °C , or above 100 °C, preferably above 110 °C, more preferably above 130 °C, such as above 150°C, even more preferably above 180 °C, such as above 200°C, most preferably above 230°C, such as above 250°C.

4. The method according to any one of the preceding claims, wherein said alkane polyol has a carbon chain of between C3 to C6, more preferably having the molecular formula $C_xH_{(2x+2)}O_x$.

5. The method according to any one of the preceding claims, wherein said additive being an alkane polyol is chosen from the group consisting of: glycerol, sorbitol, xylitol and combinations thereof.

6. The method according to any of the claims 1-3, wherein said alcohol has a carbon chain of between C3 to C6, more preferably having the molecular formula $C_xH_{(2x+2)}O$.

7. The method according to any one of the preceding claims, wherein said additive is added prior to and/or during subjecting said vegetable material to heating and wherein said additive is added at a temperature of at most 95°C, such as at most 90°C, more preferably at most 80°C, such as at most 70°C, even more preferably at most 60°C, such as at most 50°C, most preferably at most 40°C, such as at most 30°C, or at most ambient temperature (25 °C).

8. The method according to any one of the preceding claims, wherein the combination of additive and vegetable material comprises between 0.1 and 20 wt.% of said additive, preferably between 0.5 and 20 wt.% of said additive, more preferably between 1 and 15 wt.% of said additive, even more preferably between 1.5 and 15 wt.% of said additive, most preferably between 2 and 10 wt.% of said additive.

9. The method according to any one of the preceding claims, wherein the processing time of the vegetable material subjected to heating by means of radiation in the radio frequency range is between 5 minutes and 1.5 hours, preferably between 5 minutes and 60 minutes, such as between 10 minutes and 50 minutes, more preferably between 10 minutes and 40 minutes, such as between 10 minutes and 35 minutes or between 15 minutes and 30 minutes.

10. The method according to any one of the preceding claims, wherein the vegetable material is selected from grains, tubers and residual vegetable materials and one or more combinations thereof.

11. The method according to any one of the preceding claims, wherein the material is subjected to RF radiation to achieve a material temperature of between 110°C and 170°C, more preferably between 110°C and 165°C, such as between 120 °C and 165 °C, even more preferably between 130 and 165 °C, most preferably between 130 and 150 °C.

12. Use of the method according to any one of claims 1-11 for obtaining a feed for ruminants.

13. Use of the method according to any one of claims 1-11 in preparing a mixed feed for ruminants.

## Patentansprüche

1. Verfahren zum Erhöhen des Nährwerts eines pflanzlichen Materials für Wiederkäuer durch Unterwerfen eines pflanzlichen Materials an Erhitzen durch Strahlung in dem Radiofrequenzbereich, um eine Temperatur zwischen 110 °C und 180 °C zu erzielen, wobei der Bereich der Radiofrequenzstrahlung zwischen 10 MHz und 50 MHz liegt und wobei vor oder während des Unterwerfens des pflanzlichen Materials an Erhitzen ein Zusatzstoff zu dem pflanzlichen Material zugegeben wird, wobei der Zusatzstoff ein futtermittelgeeigneter polarer Stoff ist, wobei der Zusatzstoff einen Alkohol oder ein Alkanpolyol umfasst; um ein RF-behandeltes pflanzliches Material zu erhalten, wobei:

   der Aufrère-Wert, gemessen wie in der Beschreibung beschrieben, im Vergleich zu dem Wert des pflanzlichen Materials um zwischen 2 und 60 Prozenteinheiten zugenommen hat; und/oder
   der RUS-Wert, gemessen wie in der Beschreibung beschrieben, im Vergleich zu dem Wert des pflanzlichen Materials um zwischen 5 und 50 Prozenteinheiten zugenommen hat; und/oder
   der RUF-Wert, gemessen wie in der Beschreibung beschrieben, im Vergleich zu dem Wert des pflanzlichen

Materials um zwischen 5 und 50 Prozenteinheiten zugenommen hat.

2. Verfahren gemäß Anspruch 1, wobei der Zusatzstoff eine Dielektrizitätskonstante von über 5, vorzugsweise über 10, bevorzugter über 20, noch bevorzugter über 30, aufweist.

3. Verfahren gemäß einem der Ansprüche 1 und 2, wobei der Zusatzstoff einen Siedepunkt von über 90 °C oder über 100 °C, vorzugsweise über 110 °C, bevorzugter über 130 °C, wie z.B. über 150 °C, noch bevorzugter über 180 °C, wie z.B. über 200 °C, höchst bevorzugt über 230 °C, wie z.B. über 250 °C, aufweist.

4. Verfahren gemäß einem der vorstehenden Ansprüche, wobei das Alkanpolyol eine Kohlenstoffkette von zwischen C3 und C6 aufweist, bevorzugter die Molekülformel $C_xH(_{2x+2})O_x$ aufweist.

5. Verfahren gemäß einem der vorstehenden Ansprüche, wobei der Zusatzstoff, der ein Alkanpolyol ist, ausgewählt ist aus der Gruppe bestehend aus: Glycerol, Sorbit, Xylit und Kombinationen davon.

6. Verfahren gemäß einem der Ansprüche 1-3, wobei der Alkohol eine Kohlenstoffkette von zwischen C3 und C6 aufweist, bevorzugter die Molekülformel $C_xH(_{2x+2})O$ aufweist.

7. Verfahren gemäß einem der vorstehenden Ansprüche, wobei der Zusatzstoff vor und/oder während des Unterwerfens des pflanzlichen Materials an Erhitzen zugegeben wird und wobei der Zusatzstoff bei einer Temperatur von höchstens 95 °C, wie z.B. höchstens 90 °C, bevorzugter höchstens 80 °C, wie z.B. höchstens 70 °C, noch bevorzugter höchstens 60°C, wie z.B. höchstens 50 °C, höchst bevorzugt höchstens 40 °C, wie z.B. höchstens 30 °C, oder höchstens Umgebungstemperatur (25 °C) zugegeben wird.

8. Verfahren gemäß einem der vorstehenden Ansprüche, wobei die Kombination von Zusatzstoff und pflanzlichem Material zwischen 0,1 und 20 Gew.-% an dem Zusatzstoff, vorzugsweise zwischen 0,5 und 20 Gew.-% an dem Zusatzstoff, bevorzugter zwischen 1 und 15 Gew.-% an dem Zusatzstoff, noch bevorzugter zwischen 1,5 und 15 Gew.-% an dem Zusatzstoff, höchst bevorzugt zwischen 2 und 10 Gew.-% an dem Zusatzstoff umfasst.

9. Verfahren gemäß einem der vorstehenden Ansprüche, wobei die Verarbeitungsdauer des pflanzlichen Materials, das Erhitzen durch Strahlung in dem Radiofrequenzbereich unterworfen wird, zwischen 5 Minuten und 1,5 Stunden, vorzugsweise zwischen 5 Minuten und 60 Minuten, wie z.B. zwischen 10 Minuten und 50 Minuten, bevorzugter zwischen 10 Minuten und 40 Minuten, wie z.B. zwischen 10 Minuten und 35 Minuten oder zwischen 15 Minuten und 30 Minuten, beträgt.

10. Verfahren gemäß einem der vorstehenden Ansprüche, wobei das pflanzliche Material ausgewählt ist aus Körnern, Knollen und pflanzlichen Restmaterialien und einer oder mehreren Kombinationen davon.

11. Verfahren gemäß einem der vorstehenden Ansprüche, wobei das Material RF-Strahlung unterworfen wird, um eine Materialtemperatur von zwischen 110 °C und 170 °C, bevorzugter zwischen 110 °C und 165 °C, wie z.B. zwischen 120 °C und 165 °C, noch bevorzugter zwischen 130 und 165 °C, höchst bevorzugt zwischen 130 und 150 °C, zu erzielen.

12. Verwendung des Verfahrens gemäß einem der Ansprüche 1-11 zur Herstellung eines Futters für Wiederkäuer.

13. Verwendung des Verfahrens gemäß einem der Ansprüche 1-11 zur Herstellung eines Mischfutters für Wiederkäuer.

## Revendications

1. Procédé d'augmentation de la valeur nutritionnelle pour les ruminants d'une matière végétale par soumission d'une matière végétale à un chauffage au moyen d'un rayonnement dans la plage des radiofréquences pour atteindre une température comprise entre 110°C et 180°C, dans lequel la plage du rayonnement radiofréquence est comprise entre 10 MHz et 50 MHz, et dans lequel un additif est ajouté à ladite matière végétale avant ou pendant la soumission de ladite matière végétale à un chauffage, dans lequel ledit additif est une substance polaire de qualité alimentaire, ledit additif comprenant un alcool ou un polyol d'alcane ; pour obtenir une matière végétale traitée par RF dans laquelle :

la valeur Aufrère, mesurée telle que décrite dans la description, a augmenté, par rapport à la valeur de la matière végétale, entre 2 et 60 unités de pourcentage ; et/ou
la valeur RUS, mesurée telle que décrite dans la description, a augmenté, par rapport à la valeur de la matière végétale, entre 5 et 50 unités de pourcentage ; et/ou
la valeur RUF, mesurée telle que décrite dans la description, a augmenté, par rapport à la valeur de la matière végétale, entre 5 et 50 unités de pourcentage.

**2.** Procédé selon la revendication 1, dans lequel l'additif a une constante diélectrique supérieure à 5, de préférence supérieure à 10, plus préférablement supérieure à 20, encore plus préférablement supérieure à 30.

**3.** Procédé selon l'une quelconque des revendications 1 ou 2, dans lequel ledit additif a un point d'ébullition supérieur à 90°C, ou supérieur à 100°C, de préférence supérieur à 110°C, plus préférablement supérieur à 130°C, par exemple supérieur à 150°C, encore plus préférablement supérieur à 180°C, par exemple supérieur à 200°C, le plus préférablement supérieur à 230°C, par exemple supérieur à 250°C.

**4.** Procédé selon l'une quelconque des revendications précédentes, dans lequel ledit polyol d'alcane a une chaîne carbonée comprise entre C3 et C6, plus préférablement ayant pour formule moléculaire $C_xH_{(2x+2)}O_x$.

**5.** Procédé selon l'une quelconque des revendications précédentes, dans lequel ledit additif étant un polyol d'alcane est choisi dans le groupe constitué par : le glycérol, le sorbitol, le xylitol et leurs combinaisons.

**6.** Procédé selon l'une quelconque des revendications 1 à 3, dans lequel ledit alcool a une chaîne carbonée comprise entre C3 et C6, plus préférablement ayant pour formule moléculaire $C_xH_{(2x+2)}O$.

**7.** Procédé selon l'une quelconque des revendications précédentes, dans lequel ledit additif est ajouté avant et/ou pendant la soumission de ladite matière végétale à un chauffage et dans lequel ledit additif est ajouté à une température d'au plus 95°C, par exemple d'au plus 90°C, plus préférablement d'au plus 80°C, par exemple d'au plus 70°C, encore plus préférablement d'au plus 60°C, par exemple d'au plus 50°C, le plus préférablement d'au plus 40°C, par exemple d'au plus 30°C, ou d'au plus à la température ambiante (25°C).

**8.** Procédé selon l'une quelconque des revendications précédentes, dans lequel la combinaison d'additif et de matière végétale comprend entre 0,1 et 20% en poids dudit additif, de préférence entre 0,5 et 20% en poids dudit additif, plus préférablement entre 1 et 15% en poids dudit additif, encore plus préférablement entre 1,5 et 15% en poids dudit additif, le plus préférablement entre 2 et 10 % en poids dudit additif.

**9.** Procédé selon l'une quelconque des revendications précédentes, dans lequel le temps de traitement de la matière végétale soumise à un chauffage au moyen d'un rayonnement dans la plage des radiofréquences est compris entre 5 minutes et 1,5 heure, de préférence entre 5 minutes et 60 minutes, par exemple entre 10 minutes et 50 minutes, plus préférablement entre 10 minutes et 40 minutes, par exemple entre 10 minutes et 35 minutes ou entre 15 minutes et 30 minutes.

**10.** Procédé selon l'une quelconque des revendications précédentes, dans lequel la matière végétale est choisie parmi les céréales, les tubercules et les matières végétales résiduelles et une ou plusieurs de leurs combinaisons.

**11.** Procédé selon l'une quelconque des revendications précédentes, dans lequel la matière est soumise à un rayonnement RF pour atteindre une température de la matière comprise entre 110°C et 170°C, plus préférablement entre 110°C et 165°C, par exemple entre 120°C et 165°C, encore plus préférablement entre 130 et 165°C, le plus préférablement entre 130 et 150°C.

**12.** Utilisation du procédé selon l'une quelconque des revendications 1 à 11 pour obtenir un aliment pour ruminants.

**13.** Utilisation du procédé selon l'une quelconque des revendications 1 à 11 pour préparer un aliment mixte pour ruminants.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3507662 A
- US 3619200 A
- US 5023091 A
- US 3695891 A


### Non-patent literature cited in the description


- **DONG. S. et al.** *Asian Australas. J. Anim. Sci.,* 2005, vol. 18, 27-31
- **SADEGHI A. et al.** *Anim. Sci.,* 2005, vol. 80, 369-375
- **BRODIE G.** *J. Microwave Power E. E.,* 2012, vol. 46, 57-67
- **ILDIKO et al.** *Innovative Food Science and Emerging Technologies,* June 2006, vol. 7 (1-2), 74-79
- **J. L. DE BOEVER ; M. C. BLOK ; S. MILLET ; J. VANACKER ; S. DE CAMPENEERE.** The energy and protein value of wheat, maize and blend DDGS for cattle and evaluation of predicting methods. *Animal,* 2014, vol. 8 (11), 1839-1850